# EUROPÄISCHE PATENTSCHRIFT

(11) **EP 0 962 398 B1**
(45) Veröffentlichungstag und Bekanntmachung des Hinweises auf die Patenterteilung: **23.04.2003**
(21) Anmeldenummer: 99109076.2
(22) Anmeldetag: 07.05.1999
(51) Int. Cl.: B65D 55/02, B65B 7/28, B65B 51/22

(54) **Verfahren zum Herstellen eines Originalitätsverschlusses und Ultraschallschweissgerät**
Method for manufacturing a tamper-evident closure and ultrasonic welding apparatus
Procédé de fabrication d'une fermeture inviolable et dispositif de soudage par ultrasons

(30) Priorität: 03.06.1998 DE 19824785
(43) Veröffentlichungstag der Anmeldung: 08.12.1999
(73) Patentinhaber: Bellaplast Holding AG, 9450 Altstaetten (CH)
(72) Erfinder: Mecking, Bernhard, 9443 Widnau (CH); Mögling, Hermann, 90562 Heroldsberg (DE)
(74) Vertreter: Grünecker, Kinkeldey, Stockmair & Schwanhäusser Anwaltssozietät

(56) Entgegenhaltungen:
- EP-A- 0 280 488
- EP-A- 0 461 691
- WO-A-96/09965
- WO-A-98/02362
- GB-A- 2 040 267
- GB-A- 2 260 969

## Beschreibung

Die Erfindung betrifft ein Verfahren zum Herstellen eines Originalitätsverschlusses, insbesondere für Lebensmittelbehälter, bei dem ein Behältnis und ein dazu passender Deckel mit jeweils mindestens einer Schweißlasche an einander entsprechenden Stellen nach dem Befüllen des Behältnisses mit Lebensmitteln zusammengesetzt werden, und der Deckel mit dem befüllten Behältnis an den Schweißlaschen mittels eines Ultraschallschweißgerätes verschweißt wird, wonach ein Öffnen des verschweißten Lebensmittelbehälters den Lebensmittelbehälter zumindest teilweise zerstört, wobei nach dem Befüllen des Behältnisses zumindest eine Schwächungslinie, entlang der die verschweißten Schweißlaschen zum Öffnen des Lebensmittelbehälters eingerissen werden können, im Bereich der Schweißlaschen gleichzeitig mit dem Verschweißen der Schweißlaschen hergestellt wird.

Ein solches Verfahren ist beispielsweise aus der EP 0 461 691 A2 bekannt. Andere Verfahren zur Herstellung von Originalitätsverschlüssen sind aus der WO 96/09965 und der GB 2 040 267 A bekannt.

Originalitätsverschlüsse dienen dazu, den Inhalt von Behältern, beispielsweise Lebensmittelbehältern, zu schützen, indem der Lebensmittelbehälter nur unter teilweiser Zerstörung zu öffnen ist. Damit ist zum einen jederzeit nachprüfbar, ob der Lebensmittelbehälter bereits geöffnet wurde, so daß beispielsweise Kunden im Supermarkt bereits vor dem Kauf des mit dem gewünschten Lebensmittel befüllten Lebensmittelbehälters Manipulationen am Behälter feststellen können. Zum anderen wird ein unbefugtes Öffnen des Lebensmittelbehälters durch beispielsweise Kunden im Supermarkt unterbunden, die eine neue Geschmacksrichtung eines Lebensmittels im Lebensmittelbehälter vor dem Kauf testen wollen und dazu den Lebensmittelbehälter öffnen.

Herkömmlicherweise bestehen Lebensmittelbehälter mit Originalitätsverschluß aus einem Behältnis zur Aufnahme eines Lebensmittels und aus einem dazu passenden Deckel. Bei Behältnis und Deckel sind jeweils deckel- und behältnisseitige Schweißlaschen angeformt, die als sich flächig und parallel zueinander erstreckende Laschen ausgebildet sind. Im selben Arbeitsgang wird im Bereich der Schweißlaschen von Deckel und Behältnis jeweils eine Schwächungslinie eingeformt, entlang der das Material der Schweißlaschen auf verschiedene Weise, beispielsweise mittels einer Perforation, mittels einer Nut oder mittels Materialveränderungen wie Verspröden, geschwächt ist.

Dann werden die Deckel und die Behältnisse getrennt voneinander verpackt und an einen oftmals weit entfernten Befüllungsort transportiert, wobei die Deckel und die Behältnisse mehrfach umgeladen werden können.

Am Befüllungsort wird das Lebensmittel in das Behältnis gefüllt, dann ein Deckel auf das Behältnis gesetzt und anschließend der Deckel mit dem befüllten Behältnis an den Schweißlaschen verschweißt.

Zum Öffnen des Lebensmittelbehälters werden die Schweißlaschen an den Schwächungslinien eingerissen bzw. abgerissen. Danach ist der Deckel üblicherweise nach wie vor auf das Behältnis aufsetzbar und verschließt dieses, jedoch ist der Originalitätsverschluß zerstört.

Während des Transports vom Herstell- zum Befüllungsort und beim Handling sind die Deckel und Behältnisse oft großen mechanischen Belastungen unterworfen, wodurch ein Großteil der Deckel und Behältnisse beim Transport beschädigt wird und Ausschuß darstellt.

Der vorliegenden Erfindung liegt die Aufgabe zugrunde, die mechanische Belastbarkeit von Deckeln und Behältnissen bei Lebensmittelbehältern dahingehend zu verbessern, daß die Deckel und Behältnisse zumindest während des Transports vom Herstell- zum Befüllungsort weniger leicht zu Bruch gehen und damit der Anteil an ausschüssiger Ware zurückgeht.

Diese Aufgabe wird für das Verfahren zum Herstellen eines Originalitätsverschlusses der eingangs genannten Art dadurch gelöst, daß die Schwächungslinie gleichzeitig mit dem Verschweißen der Schweißflaschen sowohl deckelseitig als auch behältnisseitig durch das Ultraschallschweißgerät auf mechanische Weise hergestellt wird.

Diese Lösung hat den Vorteil, daß auf überraschend einfache Weise der durch den Transport der meist in Deckel und Behältnis getrennten Lebensmittelbehälter vom Herstell- zum Befüllungsort bedingte Ausschuß erheblich reduziert werden kann. Durch das Anbringen der Schwächungslinie nach dem Befüllen wird nämlich erreicht, daß die Deckel und Behälter ohne Schwächungslinie transportiert werden. Damit wird die Gefahr des Abbrechens der gewöhnlicherweise überstehenden Schweißlaschen beim Transport gebannt.

Die nach dem erfindungsgemäßen Verfahren nach dem Befüllen mit Schwächungslinien versehenen Deckel und Behälter sind nicht mehr so bruchempfindlich und können damit leichter gehandhabt werden. Als weiterer Effekt ergibt sich somit eine Verkürzung der Belade- und Rüstzeiten und damit eine Kosteneinsparung, da die Deckel und Behälter bzw. die zusammengesetzten Lebensmittelbehälter bis zum Anbringen der Schwächungslinie eine gröbere Behandlung vertragen.

Die Schwächungslinie wird nach dem Aufsetzen des Deckels gleichzeitig am Deckel und am Behältnis eingeformt.

Dadurch wird eine getrennte Anbringung der Schwächungslinie an Deckel und Behältnis überflüssig und es kann ein Arbeitsschritt eingespart werden. Damit ist diese Ausgestaltung kostengünstig.

Die Herstellung der Schwächungslinie gleichzeitig mit dem Verschweißen der Schweißlaschen spart nochmals einen Arbeitsschritt ein und senkt die Herstellkosten des Originalitätsverschlusses weiter.

Das Ultraschallschweißgerät dient erfindungsgemäß sowohl zum Verschweißen des Lebensmittelbehälters als auch zum Herstellen der Schwächungslinie. Durch die Verwendung einer derartigen kombinierten Sonde kann auf ein spezielles Werkzeug zur Herstellung der Schwächungslinie verzichtet werden. Gleichzeitig ermöglicht die kombinierte Ultraschallsonde das Verschweißen in der Nähe der Schwächungslinie, so daß beim Einreißen der Schwächungslinie gezielt die Schweißnaht abgetrennt werden kann.

In einer weiteren vorteilhaften Ausgestaltung kann zum Herstellen der Schwächungslinie zumindest eine Schweißlasche zumindest abschnittsweise perforiert werden. Eine Perforation ermöglicht ein exaktes Einreißen der Schwächungslinie entlang der Perforation.

Außerdem ist eine derartige Schwächungslinie in Verbindung mit einer der Schwächungslinie entsprechende geformten Ultraschallsonde leicht herzustellen.

In einer weiteren vorteilhaften Ausgestaltung kann zum Herstellen der Schwächungslinie zumindest abschnittsweise eine nutförmige Aussparung an zumindest einer Schweißlasche angebracht werden. Durch eine nutförmige Aussparung wird die Materialstärke im Bereich der Schwächungslinie herabgesetzt, was ebenfalls ein leichtes Einreißen oder Abknicken der Schweißlasche entlang der Schwächungslinie ermöglicht. Auch eine nutförmige Aussparung ist leicht mit einer entsprechend der Nut ausgestalteten Ultraschallsonde herzustellen.

In einer weiteren vorteilhaften Ausgestaltung kann der Deckel und/oder das Behältnis, vorzugsweise gleichzeitig mit der Schweißlasche, durch Tiefziehen, beispielsweise aus Polystyrolfolie, hergestellt werden. Tiefziehen ermöglicht eine wirtschaftliche Herstellung extrem großer Losgrößen und Polystyrolfolie hat sich gerade im Bereich thermisch von der Umgebung zu isolierender Lebensmittel bewährt. Durch gleichzeitiges Ausformen des Deckels bzw. des Behältnisses und der entsprechenden Schweißlasche ist auf kostengünstige und zeitsparende Weise eine Herstellung von Deckel und/oder Behältnis möglich.

Bei unverschweißtem Deckel und Behältnis können sich beide zumindest in einem Bereich flächenhaft abstützen, an dem sie verschweißt werden sollen. Eine flächenhafte Abstützung vor dem Verschweißen im Bereich der Schweißnaht ermöglicht eine sichere und fehlerfreie Verschweißung und erleichtert das Ausrichten von Deckel und Behältnis.

In einer weiteren vorteilhaften Ausgestaltung können Deckel und Behältnis zumindest abschnittsweise als Schweißlasche ausgebildet sein, an der beide miteinander verschweißt sind und die zum Öffnen des Lebensmittelbehälters entfernbar ist. Dazu ist es günstig, wenn die deckelseitige Schweißlasche im wesentlichen dieselbe Form wie die behältnisseitige Schweißlasche aufweist. Dadurch lässt sich eine gute Abdeckung der beiden Schweißlaschen erreichen, wodurch beide leichter zu verschweißen sind. Weiterhin kann sich in einer vorteilhaften Ausgestaltung die deckelseitige Schweißlasche und/oder die behältnisseitige Schweißlasche im wesentlichen parallel zur vom Deckel verschlossenen Öffnungsebene des Behältnisses erstrecken. Bei einer derart angeordneten Schweißlasche kann der Lebensmittelbehälter durch senkrecht zustellbare Schweißsonden verschweißt werden und außerdem ist ein Gegenhalter leicht vorzusehen. Dabei können die Schweißlaschen von Deckel und Behältnis bei zusammengesetztem Lebensmittelbehälter jeweils in etwa in der Öffnungsebene des Behältnisses angeordnet sein. Dadurch wird der Materialaufwand auf optimale Weise reduziert, da die Schweißlaschen direkt am Deckel- und Behältnisrand angeordnet sein können.

In einer weiteren vorteilhaften Ausgestaltung kann die Schwächungslinie zwischen einem Bereich, an dem der Deckel und das Behältnis miteinander verschweißt sind, und dem Deckel und/oder dem Behältnis angeordnet sein. Dadurch wird beim Einreißen der Schweißlasche entlang der Schwächungslinie der Bereich vom Lebensmittelbehälter abgetrennt, an dem der Deckel und das Behältnis miteinander verschweißt sind.

In einer weiteren vorteilhaften Ausgestaltung kann die Schwächungslinie im wesentlichen geradlinig, vorzugsweise quer zur Längserstreckung zumindest einer der Schweißlaschen, über die Schweißlasche verlaufen. Eine derartige Ausgestaltung der Schwächungslinie vereinfacht den Aufbau des Werkzeugs, mit dem die Schwächungslinie hergestellt wird. Eine geradlinige Schwächungslinie hat den Vorteil, daß sie nicht nur ein Einreißen, sondern auch ein Abknicken der Schweißlasche ermöglicht.

Ein Verlauf der Schwächungslinie quer über die Schweißlasche führt zu einem sauberen Abreißen der Schweißlasche, ohne daß durch einen sich seitlich ausbreitenden Bruch der Deckel eingerissen und damit für ein weiteres Verschließen unbrauchbar wird.

In einer weiteren vorteilhaften Ausgestaltung kann die Schwächungslinie im wesentlich gekrümmt, vorzugsweise quer zur Längserstreckung zumindest einer der Schweißlaschen, über die Schweißlaschen verlaufen. Eine gekrümmte Schwächungslinie verhindert ein versehentliches Abknicken des verschweißten und mit einer Schwächungslinie versehenen, befüllten Lebensmittelbehälters während des Transports zwischen dem Befüllort und dem Endverbraucher. Eine derartig gekrümmte Schwächungslinie ist vor allem bei bestimmten Perforationsgeometrien von Vorteil.

In einer weiteren vorteilhaften Ausgestaltung kann ein die Öffnung des Behältnisses umgebender Behältnisrand zumindest abschnittsweise umgebogen sein und in einen entsprechend umgebogenen Deckelrand aufnehmbar sein. In dieser Ausgestaltung kann der Deckel auch nach dem Entfernen der Schweißlasche bzw. dem Aufbrechen des Originalitätsverschlusses noch das Behältnis verschließen, indem der Behältnisrand im Deckelrand aufgenommen wird. Damit läßt sich der Lebensmittelbehälter gut selbst ohne Originalitätsverschluß weiter verwenden. Dies ist vor allem dann sinnvoll, wenn die im Lebensmittelbehälter enthaltenen Lebensmittel über einen längeren Zeitraum aufgebraucht werden.

In einer weiteren vorteilhaften Ausgestaltung kann die Schweißlasche eine im wesentlichen dreieckige Form aufweisen, wobei zwei Schenkel des Dreiecks im wesentlichen die Verlängerung von entsprechenden, an die Schweißlasche angrenzenden Ränder von Deckel und/oder Behältnis bilden. Dazu können auch zumindest die senkrechten Kanten des Behältnisses und/oder des Deckels zumindest abschnittsweise abgerundet sein. Derartig ausgestaltete Lebensmittelbehälter sind weniger anfällig gegen Beschädigungen, da die Kanten aufgrund der Rundung weniger leicht einknicken. Eine dreieckige Form der Schweißlasche minimiert den Materialverbrauch für die Schweißlasche. Außerdem kann so ein vorgeschriebenes Modulmaß eingehalten werden, ohne daß die zulässigen Längs- und Breitenmaße für den Lebensmittelbehälter durch das Vorhandensein der Schweißlasche überschritten werden.

Die Erfindung betrifft des weiteren ein Ultraschallschweißgerät, mit dem das erfindungsgemäße Verfahren durchgeführt bzw. der erfindungsgemäße Originalitätsverschluuß hergestellt wird. Die herkömmlichen Ultraschallschweißgeräte weisen einen Ultraschallkopf auf, der als Ultraschallquelle dient. Durch die vom Ultraschallkopf ausgesandten Ultraschallwellen können Kunststoffe leicht miteinander verschweißt werden. Zum Verschweißen wird dabei der Lebensmittelbehälter zweckmäßigerweise in eine entsprechende Aufnahme aufgenommen und dann der Ultraschallkopf zugestellt.

Die Erfindung betrifft somit ein Ultraschallschweißgerät zur Durchführung des erfindungsgemäßen Verfahrens, das von einer Schweißstellung, in der ein deckelseitiger Abschnitt eines Lebensmittelbehälters mit einem behältnisseitigen Abschnitt des Lebensmittelbehälters durch aus einem zum Ultraschallschweißgerät angeordneten Ultraschallkopf ausgesandten Ultraschall verschweißt werden kann, in eine Ruhestellung überführbar ist, in der das Ultraschallschweißgerät mit einem Lebensmittelbehälter bestückbar ist, indem der Lebensmittelbehälter zumindest abschnittsweise in eine Aufnahme aufgenommen ist.

Ein solches Ultraschallschweißgerät ist beispielsweise aus der WO 96/09965 bekannt. Zur Lösung der der Erfindung zugrundeliegenden Aufgabe ist bei einem derartigen Ultraschallschweißgerät erfindungsgemäß vorgesehen, daß am Ultraschallschweißgerät zumindest ein Stempel angeordnet ist, durch den in der Schweißstellung die Schwächungslinie sowohl deckelseitig als auch behältnisseitig mechanisch hergestellt ist.

Insbesondere kann am Ultraschallschweißgerät zumindest ein Stempel mit einer dem Lebensmittelbehälter zugewandten, im wesentlichen einer Form einer Schwächungslinie am Lebensmittelbehälter entsprechenden Stempelfläche angeordnet sein, der in der Schweißstellung zur Herstellung der Schwächungslinie in den Lebensmittelbehälter zugestellt ist und die Schwächungslinie einformt, und der in der Ruhestellung vom Lebensmittelbehälter beabstandet ist.

Ein derartiges Ultraschallschweißgerät ermöglicht gleichzeitig das Verschweißen des Lebensmittelbehälters zur Herstellung des Originalitätsverschlusses sowie Herstellung der Schwächungslinie durch den Stempel. Dabei drückt sich bei der Herstellung der Schwächungslinie der Stempel in das Material des Lebensmittelbehälters. Um eine Bestückung des Ultraschallschweißgeräts durchführen zu können, muß der Stempel in der Ruhestellung vom Lebensmittelbehälter beabstandet sein,

In einer weiteren vorteilhaften Ausgestaltung des Ultraschallschweißgeräts kann ein dem Stempel bezüglich des Lebensmittelbehälters gegenüberliegender Gegenhalter vorgesehen sein, dessen dem Lebensmittelbehälter zugewandte Gegenhalterfläche im wesentlichen einer Form einer Schwächungslinie am Lebensmittelbehälter entspricht und der in der Schweißstellung zur Herstellung der Schwächungslinie in den Lebensmittelbehälter zugestellt sowie in der Ruhestellung vom Lebensmittelbehälter beabstandet ist. Dadurch lässt sich eine Schwächungslinie von beiden Seiten des Lebensmittelbehälters fertigen, so daß der Originalitätsverschluß leichter zu öffnen ist, ohne daß einseitig viel Material abgetragen wird.

In einer weiteren vorteilhaften Ausgestaltung des Ultraschallschweißgerätes kann die Gegenhalterfläche und/oder die Stempelfläche zur Erzeugung einer Perforation mit Stegen versehen sein, die voneinander durch Aussparungen getrennt sind. Eine Perforation erlaubt ein besonders leichtes Öffnen des Originalitätsverschlusses.

In einer weiteren vorteilhaften Ausgestaltung können die Stege und/oder Aussparungen angeschrägt sein, so daß mit einem geringerem Kraftaufwand zur Erzeugung der Schwächungslinie das Material des Lebensmittelbehälters verdrängt oder geschnitten werden kann. Die Ausschrägung hat weiterhin den Vorteil, daß damit die Spitzen der Perforation am Bruchstück und nicht am Behälter bzw. Deckel bleiben, wenn das Ultraschallschweißgerät nach Herstellung des Originalitätsverschlusses von der Schweißlasche entfernt wird.

Im folgenden wird der Aufbau und die Funktion eines Ausführungsbeispiels des erfindungsgemäßen Verfahrens zum Herstellen eines Originalitätsverschlusses sowie eines erfindungsgemäßen Lebensmittelbehälters, der nach diesem Verfahren hergestellt ist, anhand von Zeichnungen beispielhaft beschrieben.

Es zeigen:
- Fig. 1: eine perspektivische Ansicht des in einer Schweißaufnahme aufgenommenen Behältnisses vor dem Aufsetzen eines Deckels;
- Fig. 2: die Schweißaufnahme und das Behältnis der Fig. 1 in einem Schnitt entlang der Längsrichtung der Schweißlasche;
- Fig. 3: Schweißlaschen von jeweils Behältnis und aufgesetztem Deckel beim Verschweißen und Anbringen einer Schwächungslinie;
- Fig. 4: eine Frontalansicht von Richtung des Pfeiles IV der Fig. 3 des Werkzeugs zum Verschweißen und Herstellen der Schwächungslinie;
- Fig. 5: eine Frontalansicht eines Oberteils des Werkzeugs der Fig. 4;
- Fig. 6: eine Frontalansicht eines Unterteils des Werkzeugs der Fig. 4 in Richtung des Pfeiles VI;
- Fig. 7: eine Seitenansicht des Unterteils der Fig. 6 in Richtung des Pfeiles VII;
- Fig. 8: eine Draufsicht auf die deckelseitige Schweißlasche mit der Schwächungslinie beim Verschweißen.

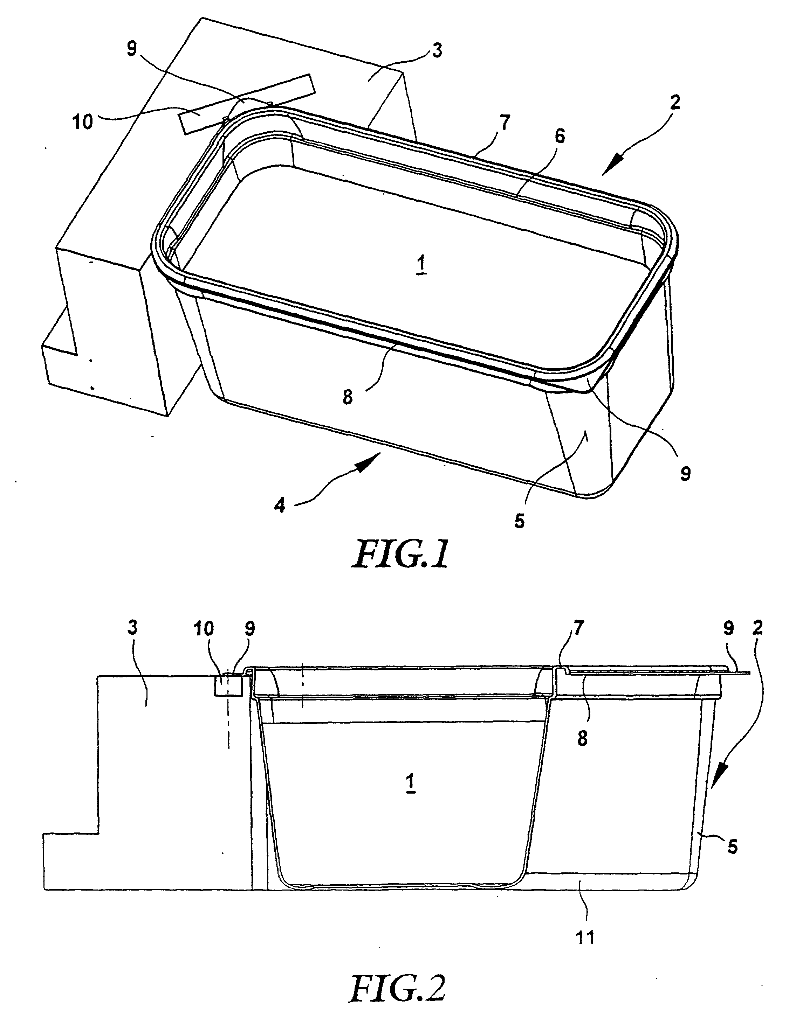

Deckel und Behältnis eines Lebensmittelbehälters werden getrennt an den Befüllungsort geliefert, wo die Behältnisse zunächst mit Lebensmittel aufgefüllt werden und dann der Deckel mit dem Behältnis verschweißt wird. In Fig. 1 ist gezeigt, wie ein mit Speiseeis 1 befülltes Behältnis 2 in einer Schweißaufnahme 3 aufgenommen ist. Normalerweise wird das bereits befüllte und verdeckelte Behältnis 2 in die Schweißaufnahme 3 eingesetzt. Der Deckel ist der Übersicht halber weggelassen.

Das Behältnis 2 hat einen im wesentlichen rechteckigen Querschnitt, der sich mit zunehmender Entfernung vom Boden 4 des Behältnisses in allen Richtungen gleichmäßig weitet. Die nach oben verlaufenden, leicht schrägen Kanten 5 des Behältnisses 2 sind abgerundet. Im Bereich des oberen Randes des Behältnisses 2 befindet sich ein nach außen gerichteter, umlaufender Absatz 6, der einen Stapelrand bildet, von dem aus die Behältniswände senkrecht nach oben verlaufen.

Der Rand 7 des Behältnisses ist nach unten hin umgebogen. Nach außen hin endet der umgebogene Rand 7 in einem kurzen waagrecht verlaufenden Ansatz 8.

An zwei diagonal gegenüberliegenden Ecken der Öffnung des Behältnisses befinden sich Schweißlaschen 9, die sich etwas unterhalb der Behältnisöffnung parallel zur Behältnisöffnung erstrecken. Die Schweißlaschen 9 haben einen im wesentlichen dreieckigen Grundriß, wobei zwei Schenkel aus den über die abgerundete Kante 5 verlängerten, waagrechten Ansätze 8 der an die Schweißlasche 9 angrenzenden Seiten des Behältnisrandes 7 gebildet werden. Die Spitze der Schweißlasche 9 ist abgerundet. Die Basis wird vom entsprechend dem abgerundeten Kantenverlauf 5 abgerundeten Behältnisrand 7 gebildet, der sich nach oben über die Schweißlasche 9 erstreckt.

In Fig. 1 ist gezeigt, wie ein Eck des Behältnisses 2 in einer Schweißaufnahme 3 aufgenommen ist, wobei sich die Schweißlasche 9 auf dem Unterteil einer kombinierten Schweiß- und Schwächungseinrichtung 10 abstützt. Dabei liegt die Schweißlasche 9 ganzflächig auf dem Unterteil 10 auf.

Fig. 2 zeigt das Behältnis 2 und die Schweißaufnahme 3 der Fig. 1 in einem Schnitt entlang der Längsrichtung der in der Schweißaufnahme 3 aufgenommenen Schweißlasche 9. Die Längsrichtung der Schweißlasche 9 erstreckt sich von der Spitze der Schweißlasche 9 zur Mitte ihrer Grundfläche, also im gezeigten Ausführungsbeispiel um 45° zu den jeweiligen Seitenkanten.

Hier ist zu erkennen, daß die Seitenwände des Behältnisses nach außen geneigt verlaufen, daß die Kante 11 zwischen den Seitenwänden und den Böden ebenfalls abgerundet ist und daß der Rand 7 einen in der Öffnungsebene des Behälters liegenden Abschnitt aufweist, der an den Außenrändem nach unten abgebogen ist und dann in den waagerechten Ansatz 8 übergeht.

Anschließend wird in der in Fig. 1 und Fig. 2 gezeigten Lage des Behältnisses 1 ein Deckel 12 auf das Behältnis 2 aufgesetzt und an den Schweißlaschen 9 mit dem Behältnis 2 verschweißt, wobei gleichzeitig eine Schwächungslinie angebracht wird.

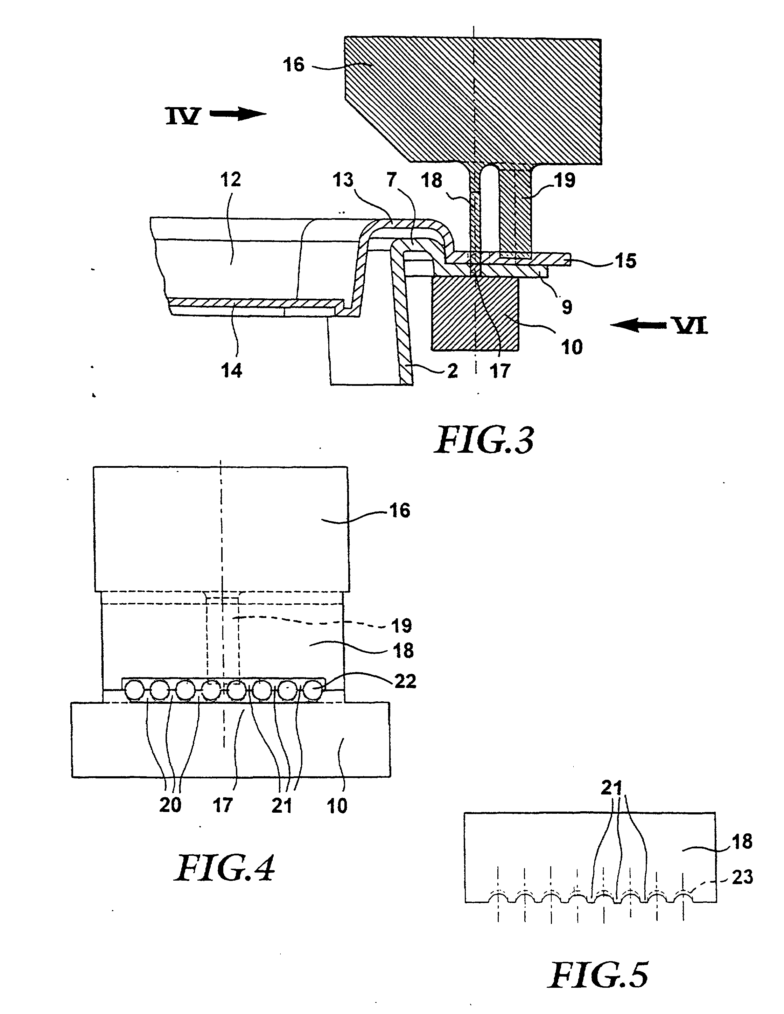

Die gleichzeitige Herstellung der Schweißung und der Schwächungslinie ist in der Fig. 3 gezeigt, die in einem Längsschnitt entlang der Schweißlasche 9 eine Einzelheit im Bereich der Schweißlasche zeigt.

Der Deckel 12 ist dabei auf das Behältnis 2 aufgesetzt. Der Deckel weist ebenfalls einen umgebogenen Rand 13 auf, der von einer Deckelebene 14 sich umlaufend schräg nach oben erstreckt und dessen äußeres Ende in etwa genau so weit vom Inneren des Behälters 2 beabstandet ist wie das äußere Ende des umgebogenen Randes 7 des Behältnisses 2. Damit kann der umgebogene Rand 13 des Deckels auf den umgebogenen Rand 7 des Behältnisses gestülpt werden, wobei sich die senkrecht verlaufenden Wandabschnitte bei Deckel 12 und Behältnis 2 in Richtung parallel zur Öffnungsebene des Behältnisses 2 elastisch verformen, so daß ein sicherer Halt gewährleistet ist Dieser Verschluß in Form einer Schnappung ist im Bereich der Schweißlaschen unterbrochen. Die Deckelebene 14 liegt unterhalb der Öffnungsebene des Behältnisses.

Ist der Deckel 12 derart auf das Behältnis 2 aufgesetzt, so liegt eine deckelseitige Schweißlasche 15 flächig auf der behältnisseitigen Schweißlasche 9 auf. Der Deckel 12 weist an ebenfalls zwei diagonal gegenüberliegenden Ecken zwei Schweißlaschen 15 auf, wobei die Ecken mit den deckelseitigen Schweißlaschen 15 mit den Ecken mit den behältnisseitigen Schweißlaschen 9 übereinstimmen. Bei aufgesetztem Deckel ragen die deckelseitigen Schweißlaschen 15 über die behältnisseitigen Schweißlaschen 9. Die deckelseitigen Schweißlaschen 15 haben ebenfalls einen im wesentlichen dreieckigen Grundriß, wobei zwei Schenkel von den angrenzenden, verlängerten Seiten des Dekkels gebildet werden und die Spitze des Dreiecks abgerundet ist. Die Basis der dreieckigen Schweißlaschen 15 wird vom über die Schweißlaschenebene 15 erhobenen, umgebogenen Rand 13 des Deckels gebildet.

Deckel und Behältnis sind jeweils aus Polystyrolfolie tiefgezogen, wobei in der Tiefziehform die jeweiligen Schweißlaschen 9, 15 mitgeformt werden. Die Wandstärke beträgt 1 mm bei Deckel und Behältnis. Die Ecken der Schweißlaschen 9 stehen jeweils etwa 10mm über dem Behälterrand 7, die Ecken der Schweißlaschen 15 jeweils etwa 9mm über den Behälterrand 13.

In Fig. 3 ist gezeigt, wie zum Verschweißen der beiden Schweißlaschen 15 eine Sonotrode 16 senkrecht zur Ebene der Schweißlaschen 9, 15 in das Material der Schweißlaschen zugestellt ist. Das Unterteil 10 der kombinierten Schwächungs- und Schweißvorrichtung bildet dabei einen Amboß und ein Widerlager für die Sonotrode 16.

Die Schwächungslinie wird beim hier geschilderten Ausführungsbeispiel sowohl bei der deckelseitigen Schweißlasche 15 als auch bei der behältnisseitigen Schweißlasche 9 angebracht und ist als eine geradlinige, senkrecht zur Längsrichtung der Schweißlaschen 9, 15 verlaufende Nut ausgebildet, deren Grund sich in etwa auf halber Materialstärke von jeweils Deckel 12 und Behälter 2 befindet. In regelmäßigen Abständen sind beide Nuten mit Durchgangsöffnungen perforiert. Die Nut hat einen im wesentlichen rechteckigen Querschnitt, die Durchgangsöffnungen sind quadratisch.

Erzeugt wird die Schwächungslinie durch einen am Unterteil 10 der Schwächungs- und Schweißanlage angeordneten Gegenhalter 17, der im wesentlichen die Form der unteren Nut und der Durchgangsöffnungen aufweist. Deckelseitig wird die Schwächungslinie durch einen in der Form dem Gegenhalter 17 im wesentlichen entsprechenden Stempel 18 gebildet.

Ein Ultraschallkopf 19 von im wesentlichen kreisförmigen Querschnitt wird außerhalb des Stempels 18 gleichzeitig mit diesem in die deckelseitige Schweißlasche 15 zugestellt. Er erzeugt Ultraschall, durch den die beiden Schweißlaschen 9, 15 an ihren angrenzenden Flächen miteinander verschweißt werden. Dabei liegt der Mittelpunkt der Schallquelle 19 auf der Längsachse der Schweißlasche 15. Die Schallquelle 19 erstreckt sich um etwa die Hälfte der Materialstärke der Schweißlasche 15 weniger weit in Richtung senkrecht zur Schweißlasche 15 als der Stempel 18.

Ein gleichzeitiges Verschweißen der beiden Schweißlaschen 9 und 15 und Herstellen der Schweißnaht wird dadurch gewährleistet, daß der Ultraschallkopf 19 und der Stempel 18 an der Sonotrode 16 angebracht sind und gleichzeitig zugestellt werden. Durch den Druck des Stempels 18 wird die Schweißfläche 9 auf den Gegenhalter 17 gepreßt.

Nach Entfernen der Sonotrode 16, Zurückfahren des Gegenhalters 17 bzw. Herausheben des nun verschweißten Lebensmittelbehälters, der aus Behältnis 2 und Deckel 12 besteht, aus der Schweißaufnahme 3 ist das Verfahren zur Herstellung des Originalitätsverschlusses abgeschlossen. Als Ergebnis liegt ein mit einem Originalitätsverschluß versehener, mit Lebensmittel befüllter Lebensmittelbehälter vor.

In Fig. 4 ist der Gegenhalter 17 des Unterteils 10 zusammen mit der Sonotrode 16 in einer Frontalansicht in Blickrichtung des Pfeiles IV der Fig. 3 dargestellt.

Unterteil 10 und Sonotrode 16 der Fig. 4befinden sich in der in Fig. 3 gezeigten Stellung, die bei der Fertigstellung der Schwächungslinie und beim Verschweißen eingenommen wird. Der Übersicht halber sind die Schweißlaschen 9 und 15 nicht dargestellt. Die Grenzfläche zwischen den Schweißlaschen 9 und 15 verläuft entlang der Trennungslinie zwischen Unterteil 10 und Sonotrode 16. Die Durchgangsöffnungen der Schwächungslinie werden in der behältnisseitigen Schweißlasche 9 durch Stege 20 der Gegenhalter 17 und in der deckelseitigen Schweißlasche 15 durch Stege 21 hergestellt. Zwischen den Stegen 20 und 21 und des Stempels 18 befinden sich jeweils halbkreisförmige Ausschnitte, die sich bei an das Unterteil 10 gefahrener Sonotrode 16 zu Kreisen 22 ergänzen.

Der Durchmesser dieser Kreise beträgt beim gezeigten Ausführungsbeispiel ca. 1,5 mm, der Abstand zwischen den Kreismittelpunkten 2 mm.

Fig. 5 zeigt den Stempel 18 zum gleichzeitigen Formen der Schwächungslinie mit dem Verschweißen getrennt vom Unterteil 10. Wie jeweils durch die Strichlinien 23 angedeutet ist, sind die halbkreisförmigen Ausschnitte zwischen den Stegen 21 angeschrägt, so daß sich ihr Durchmesser in Richtung nach außen relativ zur Schweißlasche 15 weitet Dadurch entsteht eine angeschrägte Schnittfläche, an der die Bruchstücke der Perforation leichter haften bleiben, und der senkrecht in der Schweißlasche eindringende Stempel 18 ist leichter in das Material zuzustellen.

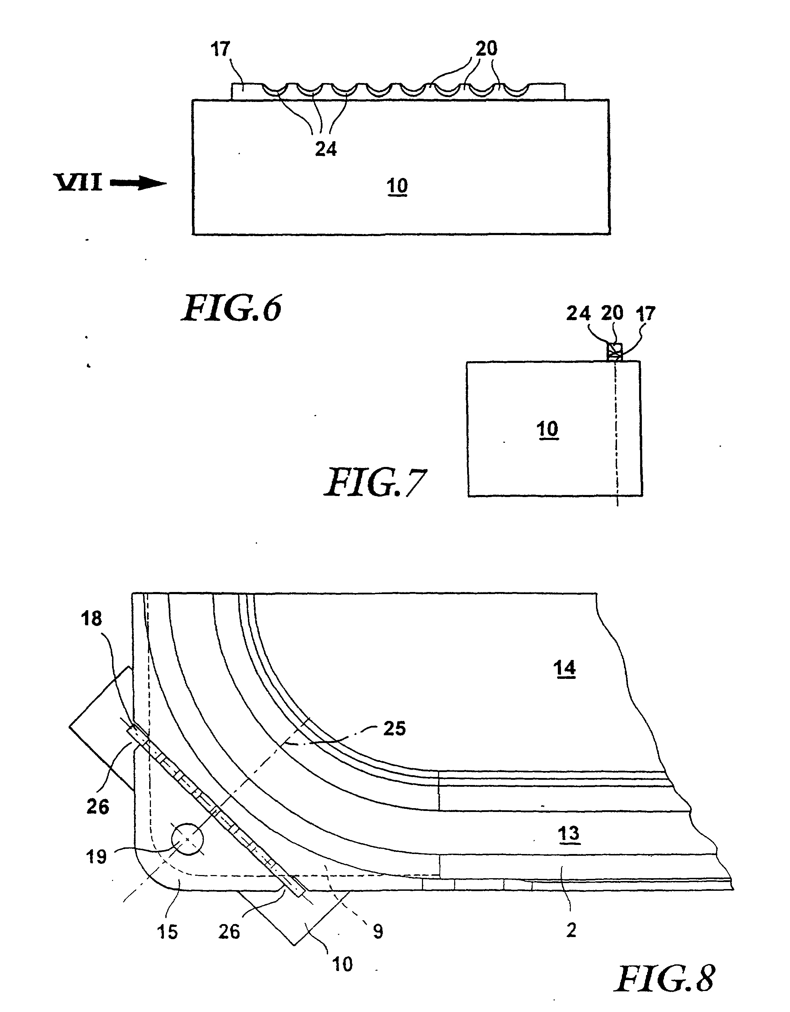

Fig. 6 zeigt das Unterteil 10 in einer Ansicht in Richtung des Pfeiles VI der Fig. 3. Die Halbkreise zwischen den Stegen 20 weiten sich in Richtung der Längsachse der Schweißnaht 15 nach außen. Dadurch entstehen abgeschrägte Schneidkanten 24. Der Schrägungswinkel der Flächen 24 beträgt etwa 20°. Die Dicke des Stempels der Schweißlaschen sowie die Breite des Gegenlagers 17 beträgt in Längsrichtung 25 0,8 mm. Der äußere, untere Rand der Schneidflächen 24 ist etwa 0,25 mm von der Oberseite des Unterteils 10 entfernt. Dementsprechend beträgt die lichte Weite den Wert der Schwächungslinien von Deckel und Behältnis ebenfalls etwa 0,8mm.

Fig. 7 zeigt das Unterteil 10 in Blickrichtung des Pfeiles VII der Fig. 6, geschnitten durch den Mittelpunkt einer halbkreisförmigen Aussparung zwischen den Stegen 20. Die Form des Gegenhalters 17 entspricht wie der Stempel 18 der Form der Schwächungslinie, wie sie in der behältnisseitigen Schweißlasche 9 ausgebildet wird.

Fig. 8 zeigt eine Draufsicht auf die deckelseitige Schweißlasche 15 beim Verschweißen der Schweißlaschen und beim Herstellen der Schwächungslinie. Die Schnittebene verläuft parallel zur Öffnungsebene des Behältnisses und schneidet Stempel 18 und Schallquelle 19. Der Stempel 18 erstreckt sich senkrecht zur Längsrichtung 25 geradlinig über die Schweißlasche 15. An den Abschnitten, an denen der Stempel 18 den Außenrand der Schweißlasche 15 berührt, sind zwei rechtwinklige Einschnitte 26 angebracht, deren einer Schenkel parallel zur Schwächungslinie an deren inneren Rand verläuft. In Richtung des Behältnisinneren erstrecken sich diese Einschnitte 26 bis zum Außenrand der behältnisseitigen Schweißlasche 9. Die Einschnitte 26 dienen zum leichteren Einreißen des fertiggestellten Originalitätsverschlusses. Nachdem die Schweißlaschen 9, 15 abgerissen wurden, entsteht dank der Einschnitte 26 eine gratfreie Ecke. In der Fig. 8 erstrecken sich die Einschnitte 26 ca. 1,2 mm senkrecht zu den jeweilig entsprechenden Seitenränder des Deckels 2.

Der gemäß dem Ausführungsbeispiel hergestellte Originalitätsverschluß weist sieben Durchgangsöffnungen auf, die den sieben Stegen 20, 21 des Gegenhalters 17 bzw. Stempel 18 entsprechen.

Zum Öffnen können die miteinander verschweißten Schweißlaschen 9 und 15 entweder entlang der Schweißlinie nach oben oder unten durch Verschwenken abgeknickt werden oder entlang der Schwächungslinie mit Hilfe der Einschnitte 26 abgerissen werden. Allerdings kann der Lebensmittelbehälter beispielsweise zu Inspektionszwecken durch Anheben an den nicht verschweißten Punkten geöffnet werden. Da der Ultraschallkopf 19 vom Behälterinneren aus gesehen jenseits der Schwächungslinie liegt, wird durch Abtrennen der Schweißlaschen 9, 15 entlang der Schwächungslinie die Schweißstelle vom Lebensmittelbehälter getrennt und der Deckel 12 ist vom Behältnis 2 abnehmbar. Die Ausgestaltung der umgebogenen Ränder 7, 13 von Deckel und Behältnis erlauben das Verschließen des Deckels selbst nach Öffnen des Originalitätsverschlusses. Durch das Fehlen der Schweißlaschen oder durch deren Beschädigung ist sofort überprüfbar, ob der Lebensmittelbehälter schon einmal geöffnet wurde, also an ihm manipuliert wurde.

## Patentansprüche

1. Verfahren zum Herstellen eines Originalitätsverschlusses, insbesondere für Lebensmittelbehälter, bei dem ein Behältnis (2) und ein dazu passender Deckel (12) mit jeweils mindestens einer Schweißlasche (9, 15) an einander entsprechenden Stellen nach dem Befüllen des Behältnisses mit Lebensmitteln zusammengesetzt werden, und der Deckel mit dem befüllten Behältnis an den Schweißlaschen mittels eines Ultraschallschweißgerätes (10, 16, 17, 18, 19) verschweißt wird, wonach ein Öffnen des verschweißten Lebensmittelbehälters den Lebensmittelbehälter zumindest teilweise zerstört, wobei nach dem Befüllen des Behältnisses zumindest eine Schwächungslinie, entlang der die verschweißten Schweißlaschen zum Öffnen des Lebensmittelbehälters eingerissen werden können, im Bereich der Schweißlaschen hergestellt wird, **dadurch gekennzeichnet, daß** die Schwächungslinie gleichzeitig mit dem Verschweißen der Schweißlaschen (9, 15) sowohl deckelseitig als auch behältnisseitig durch das Ultraschallschweißgerät (10, 16, 17, 18, 19) auf mechanische Weise hergestellt wird.

2. Verfahren nach Anspruch 1, **dadurch gekennzeichnet, daß** zur mechanischen Herstellung der Schwächungslinie ein der Schwächungslinie entsprechend geformter Stempel (17, 18) deckelseitig und behältnisseitig in die entsprechende Schweißlasche (9, 15) zugestellt und so die Schwächungslinie eingeformt wird.

3. Verfahren nach Anspruch 1 oder 2, **dadurch gekennzeichnet, daß** zum Herstellen der Schwächungslinie zumindest eine Schweißlasche (9, 15) zumindest abschnittsweise perforiert wird.

4. Verfahren nach einem der obengenannten Ansprüche, **dadurch gekennzeichnet, daß** zum Herstellen der Schwächungslinie zumindest abschnittsweise eine nutförmige Aussparung an zumindest einer Schweißlasche (9, 15) angebracht wird.

5. Verfahren nach einem der obengenannten Ansprüche, **dadurch gekennzeichnet, daß** der Deckel (12) und/oder das Behältnis (2), vorzugsweise gleichzeitig mit der Schweißlasche (9, 15), durch Tiefziehen, beispielsweise aus Polystyrolfolie, hergestellt werden.

6. Ultraschallschweißgerät (10, 16, 17, 18, 19) zur Durchführung des Verfahrens nach einem der Ansprüche 1 bis 5, das von einer Schweißstellung, in der ein deckelseitiger Abschnitt (15) eines Lebensmittelbehälters mit einem behälterseitigen Abschnitt (9) des Lebensmittelbehälters durch einen am Ultraschallschweißgerät angeordneten Ultraschallkopf (19) verschweißt werden kann, in eine Ruhestellung überführbar ist, in der das Ultraschallschweißgerät mit dem Lebensmittelbehälter bestückbar ist, indem der Lebensmittelbehälter zumindest abschnittsweise in eine Aufnahme aufgenommen ist, **dadurch gekennzeichnet, daß** am Ultraschallschweißgerät (10, 16, 17, 18, 19) zumindest ein Stempel (17, 18) angeordnet ist, durch den in der Schweißstellung die Schwächungslinie sowohl deckelseitig als auch behältnisseitig mechanisch hergestellt ist.

7. Ultraschallschweißgerät nach Anspruch 6, **dadurch gekennzeichnet, daß** der Stempel (17, 18) eine dem Lebensmittelbehälter (2, 12) zugewandte Stempelfläche, im wesentlichen der Form der Schwächungslinie am Lebensmittelbehälter (2, 12) entsprechende Stempelfläche aufweist und in der Schweißstellung zur Herstellung der Schwächungslinie in den Lebensmittelbehälter (2, 12) zugestellt sowie in der Ruhestellung vom Lebensmittelbehälter (2, 12) beabstandet ist.

8. Ultraschallschweißgerät nach Anspruch 6 oder 7, **dadurch gekennzeichnet, daß** das Ultraschallschweißgerät (10, 16, 17, 18, 19) ein dem Stempel (17, 18) bezüglich des Lebensmittelbehälters (2, 12) gegenüberliegenden Gegenhalter (17, 18) aufweist, dessen dem Lebensmittelbehälter (2, 12) zugewandte Gegenhalterfläche im wesentlichen der Form der Schwächungslinie am Lebensmittelbehälter (2, 12) entspricht und der in der Schweißstellung zur Herstellung der Schwächungslinie in den Lebensmittelbehälter zugestellt sowie in der Ruhestellung vom Lebensmittelbehälter beabstandet ist.

9. Ultraschallschweißgerät nach einem der Ansprüche 6 bis 8, **dadurch gekennzeichnet, daß** die Gegenhalterfläche und/oder die Stempelfläche in einem Querschnitt entlang einer Längserstreckung (25) einer Schweißlasche (9, 15) des Lebensmittelbehälters (2, 12) im wesentlichen rechteckig ausgestaltet sind.

10. Ultraschallschweißgerät nach einem der Ansprüche 6 bis 9, **dadurch gekennzeichnet, daß** die Gegenhalterfläche und/oder die Stempelfläche sich quer zur Längserstreckung (25) der Schweißlasche (9, 15) des Lebensmittelbehälters (2, 12) über die gesamte Schweißlasche (9, 15) erstrecken.

11. Ultraschallschweißgerät nach einem der Ansprüche 6 bis 10, **dadurch gekennzeichnet, daß** die Gegenhalterfläche und/oder die Stempelfläche zur Erzeugung einer Perforation mit Stegen (20, 21) versehen sind, die voneinander durch Aussparungen (22) getrennt sind.

12. Ultraschallschweißgerät nach einem der Ansprüche 6 bis 11, **dadurch gekennzeichnet, daß** die Aussparungen (22) quer zur Längsrichtung (25) der Schweißlasche (9, 15) rechtwinklig oder gebogen ausgestaltet sind.

13. Ultraschallschweißgerät nach einem der Ansprüche 6 bis 12, **dadurch gekennzeichnet, daß** die Stege (20, 21) und/oder Aussparungen (22) angeschrägt sind.

14. Ultraschallschweißgerät nach einem der Ansprüche 6 bis 12, **dadurch gekennzeichnet, daß** die Stempelfläche und die Gegenhalterfläche eine sich im wesentlichen einander entsprechende Form aufweisen und sich deren Stege (20, 21) in der Schweißstellung berühren.

15. Ultraschallschweißgerät nach einem der Ansprüche 6 bis 13, **dadurch gekennzeichnet, daß** die Gegenhalterfläche und/oder die Stempelfläche in Richtung der Längserstreckung (25) der Schweißlasche (9, 15) eine Breite von 0,5 bis 2mm, vorzugsweise zwischen 0,7 und 1mm, aufweist.

## Claims

1. A method of producing a tamper-evident closure, in particular for food containers, in which a container (2) and a lid (12) to fit thereon, each having at least one welding lug (9, 15) at mutually corresponding points, are put together after the container has been filled with food, and the lid is welded to the filled container at the welding lugs by means of an ultrasonic welding device (10, 16, 17, 18, 19), whereafter opening of the welded food container at least partially destroys the food container, at least one weakened line being produced in the area of the welding lugs after filling of the container, along which line the welded welding lugs may be torn to open the food container, **characterised in that** the weakened line is produced mechanically at the same time as welding of the welding lugs (9, 15) both on the lid side and on the container side by the ultrasonic welding device (10, 16, 17, 18, 19).

2. A method according to claim 1, **characterised in that,** for mechanical production of the weakened line, a die (17, 18), shaped in accordance with the weakened line, is served up to the corresponding welding lug (9, 15) on the lid and container sides and the weakened line is thus formed.

3. A method according to claim 1 or claim 2, **characterised in that**, to produce the weakened line, at least one welding lug (9, 15) is perforated at least in places.

4. A method according to one of the preceding claims, **characterised in that,** to produce the weakened line, a groove-shaped recess is applied to at least one welding lug (9, 15) at least in places.

5. A method according to one of the preceding claims, **characterised in that** the lid (12) and/or the container (2) are produced, preferably at the same time as the welding lug (9, 15), by deep-drawing, for example from polystyrene film.

6. An ultrasonic welding device (10, 16, 17, 18, 19) for performing the method according to one of claims 1 to 5, which may be transferred from a welding position, in which a lid-side portion (15) of a food container may be welded together with a container-side portion (9) of the food container by an ultrasound head (19) arranged on the ultrasonic welding device, into a rest position, in which the ultrasonic welding device may be loaded with the food container, the food container being accommodated at least partially in a receptacle, **characterised in that** there is arranged on the ultrasonic welding device (10, 16, 17, 18, 19) at least one die (17, 18), by means of which in the welding position the weakened line is produced mechanically both on the lid side and on the container side.

7. An ultrasonic welding device according to claim 6, **characterised in that** the die (17, 18) comprises a die surface facing the food container (2, 12) and substantially corresponding in shape to the weakened line on the food container (2, 12), and in the welding position is served up to the food container (2, 12) to produce the weakened line and in the rest position is spaced from the food container (2, 12).

8. An ultrasonic welding device according to claim 6 or claim 7, **characterised in that** the ultrasonic welding device (10, 16, 17, 18, 19) comprises a counterpart (17, 18) lying opposite the die (17, 18) relative to the food container (2, 12), the counterpart surface, facing the food container (2, 12), of which counterpart (17, 18) corresponds substantially in shape to the weakened line on the food container (2, 12) and which counterpart (17, 18) in the welding position is served up to the food container to produce the weakened line and in the rest position is spaced from the food container.

9. An ultrasonic welding device according to one of claims 6 to 8, **characterised in that** the counterpart surface and/or the die surface are substantially rectangular in cross section along a lengthwise extension (25) of a welding lug (9, 15) of the food container (2, 12).

10. An ultrasonic welding device according to one of claims 6 to 9, **characterised in that** the counterpart surface and/or the die surface extend perpendicularly to the lengthwise extension (25) of the welding lug (9, 15) of the food container (2, 12) over the entire welding lug (9, 15).

11. An ultrasonic welding device according to one of claims 6 to 10, **characterised in that** the counterpart surface and/or the die surface are provided with webs (20, 21) for effecting perforation, which webs are separated from one another by recesses (22).

12. An ultrasonic welding device according to one of claims 6 to 11, **characterised in that** the recesses (22) are rectangular or curved in form perpendicularly to the lengthwise direction (25) of the welding lug (9, 15).

13. An ultrasonic welding device according to one of claims 6 to 12, **characterised in that** the webs (20, 21) and/or recesses (22) are bevelled.

14. An ultrasonic welding device according to one of claims 6 to 12, **characterised in that** the die surface and the counterpart surface are substantially matching in shape and the webs (20, 21) thereof touch in the welding position.

15. An ultrasonic welding device according to one of claims 6 to 13, **characterised in that** the counterpart surface and/or the die surface exhibit a width of 0.5 to 2 mm, preferably between 0.7 and 1 mm, in the direction of lengthwise extension (25) of the welding lug (9, 15).

## Revendications

1. Procédé de fabrication d'une fermeture inviolable, en particulier pour contenants alimentaires, dans lequel un récipient (2) et un couvercle (12) correspondant, pourvus chacun d'au moins une patte de soudage (9, 15), sont assemblés en des points qui se correspondent, après le remplissage du récipient avec des produits alimentaires, et le couvercle est soudé avec le récipient rempli au niveau des pattes de soudage au moyen d'un dispositif de soudage par ultrasons (10, 16, 17, 18, 19), une ouverture du contenant alimentaire soudé détruisant au moins en partie ledit contenant alimentaire, au moins une ligne d'affaiblissement, le long de laquelle on peut déchirer les pattes de soudage soudées pour ouvrir le contenant alimentaire, étant réalisée dans la région des pattes de soudage après le remplissage du récipient, **caractérisé en ce qu'**à l'aide du dispositif de soudage par ultrasons (10, 16, 17, 18, 19), on réalise mécaniquement la ligne d'affaiblissement en même temps que le soudage des pattes de soudage (9, 15), tant côté couvercle que côté récipient.

2. Procédé selon la revendication 1, **caractérisé en ce que** pour réaliser mécaniquement la ligne d'affaiblissement, on avance dans la patte de soudage (9, 15) appropriée, côté couvercle et côté récipient, un poinçon (17, 18), dont la conformation correspond à la ligne d'affaiblissement, et on forme ainsi la ligne d'affaiblissement.

3. Procédé selon la revendication 1 ou 2, **caractérisé en ce que** pour réaliser la ligne d'affaiblissement, on perfore, au moins par tronçons, au moins une patte de soudage (9, 15).

4. Procédé selon l'une des revendications précédentes, **caractérisé en ce que** pour réaliser la ligne d'affaiblissement, on aménage, au moins par tronçons, un évidement en forme de rainure sur au moins une patte de soudage (9, 15).

5. Procédé selon l'une des revendications précédentes, **caractérisé en ce qu'**on fabrique le couvercle (12) et/ou le récipient (2), de préférence en même temps que la patte de soudage (9, 15), par emboutissage, par exemple à partir d'une feuille de polystyrène.

6. Dispositif de soudage par ultrasons (10, 16, 17, 18, 19) pour la mise en oeuvre du procédé selon l'une des revendications 1 à 5, lequel dispositif peut être transféré d'une position de soudage, dans laquelle une partie (15) côté couvercle d'un contenant alimentaire peut être soudée à une partie (9) côté récipient du contenant alimentaire par une tête à ultrasons (19) montée sur le dispositif de soudage par ultrasons, dans une position de repos dans laquelle on peut installer le contenant alimentaire dans le dispositif de soudage par ultrasons en le plaçant au moins en partie dans un logement, **caractérisé en ce que** le dispositif de soudage par ultrasons (10, 16, 17, 18, 19) comporte au moins un poinçon (17, 18) à l'aide duquel on peut, dans la position de soudage, réaliser mécaniquement la ligne d'affaiblissement aussi bien côté couvercle que côté récipient.

7. Dispositif de soudage par ultrasons selon la revendication 6, **caractérisé en ce que** le poinçon (17, 18) présente une face tournée vers le contenant alimentaire (2, 12), une face correspondant sensiblement à la forme de la ligne d'affaiblissement sur le contenant alimentaire (2, 12) et que dans la position de soudage, il est avancé dans le contenant alimentaire (2, 12) pour fabriquer la ligne d'affaiblissement et est écarté dudit contenant alimentaire (2, 12) dans la position de repos.

8. Dispositif de soudage par ultrasons selon la revendication 6 ou 7, **caractérisé en ce que** le dispositif de soudage par ultrasons (10, 16, 17, 18, 19) présente un serre-flan (17, 18) qui est situé en vis-à-vis du poinçon (17, 18) par rapport au contenant alimentaire (2, 12), dont la face tournée vers le contenant alimentaire (2, 12) correspond sensiblement à la forme de la ligne d'affaiblissement sur le contenant alimentaire (2, 12) et qui, dans la position de soudage, est avancé dans le contenant alimentaire pour fabriquer la ligne d'affaiblissement et est écarté dudit contenant alimentaire dans la position de repos.

9. Dispositif de soudage par ultrasons selon l'une des revendications 6 à 8, **caractérisé en ce que** la face du serre-flan et/ou la face du poinçon sont pour l'essentiel rectangulaires en coupe transversale le long d'un prolongement longitudinal (25) d'une patte de soudage (9, 15) du contenant alimentaire (2, 12).

10. Dispositif de soudage par ultrasons selon l'une des revendications 6 à 9, **caractérisé en ce que** la face du serre-flan et/ou la face du poinçon s'étendent sur toute la patte de soudage (9, 15), transversalement au prolongement longitudinal (25) de la patte de soudage (9, 15) du contenant alimentaire (2, 12).

11. Dispositif de soudage par ultrasons selon l'une des revendications 6 à 10, **caractérisé en ce que** la face du serre-flan et/ou la face du poinçon, pour produire une perforation, sont pourvues de nervures (20, 21) qui sont séparées les unes des autres par des évidements (22).

12. Dispositif de soudage par ultrasons selon l'une des revendications 6 à 11, **caractérisé en ce que** les évidements (22) sont à angle droit ou sont coudés transversalement au prolongement longitudinal (25) de la patte de soudage (9, 15).

13. Dispositif de soudage par ultrasons selon l'une des revendications 6 à 12, **caractérisé en ce que** les nervures (20, 21) et/ou les évidements (22) sont biseautés.

14. Dispositif de soudage par ultrasons selon l'une des revendications 6 à 12, **caractérisé en ce que** la face du poinçon et la face du serre-flan présentent des formes qui se correspondent sensiblement et que leurs nervures (20, 21) sont mutuellement en contact dans la position de soudage.

15. Dispositif de soudage par ultrasons selon l'une des revendications 6 à 13, **caractérisé en ce que** la face du serre-flan et/ou la face du poinçon présentent, dans la direction du prolongement longitudinal (25) de la patte de soudage (9, 15), une largeur comprise entre 0,5 et 2 mm, de préférence comprise entre 0,7 et 1 mm.
